(19) Europäisches Patentamt
European Patent Office
Office européen des brevets

(11) **EP 3 094 755 B1**

(12) **EUROPEAN PATENT SPECIFICATION**

(45) Date of publication and mention of the grant of the patent:
**26.04.2023 Bulletin 2023/17**

(21) Application number: **15700858.2**

(22) Date of filing: **16.01.2015**

(51) International Patent Classification (IPC):
***C08G 65/332*** (2006.01) ***C14C 9/02*** (2006.01)

(52) Cooperative Patent Classification (CPC):
**C14C 9/02; C08G 65/3322**

(86) International application number:
**PCT/EP2015/050766**

(87) International publication number:
**WO 2015/107148 (23.07.2015 Gazette 2015/29)**

(54) **POLYMERIC FATLIQUORS**

POLYMERE FETTUNGSMITTEL

LIQUEURS GRASSES POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2014 IT VI20140006**

(43) Date of publication of application:
**23.11.2016 Bulletin 2016/47**

(73) Proprietor: **Corichem S.r.l.**
**36040 Sarego (VI) (IT)**

(72) Inventors:
- **LOVATO, Giancarlo**
  **36040 Sarego (VI) (IT)**
- **PAGANIN, Michela**
  **36040 Sarego (VI) (IT)**

(74) Representative: **Burchielli, Riccardo et al**
**Barzano & Zanardo Roma S.p.A.**
**Via Piemonte 26**
**00187 Roma (IT)**

(56) References cited:
**WO-A1-2009/080489 DE-A1- 19 506 107**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 094 755 B1

## Description

The invention relates to the synthesis of a new category of substances, more precisely polymeric fatliquors, employable in various fields.

In detail, these substances may be used for realizing products to fat leather.

The products currently on the market, for fat liquoring leather, employ predominantly synthetic derivatives (from petroleum) or of animal origin, available in increasingly smaller quantities and therefore with higher costs, as well as with obvious consequences on environmental impact.

Furthermore, in the field of leathers processing, it is not yet possible to obtain a fat liquoring treatment that maintains them soft and fluffy to touch and which at the same time makes them elastic and protects them from tearing or from external agents, with a low content of extractable fatty substances enough to make them washable by hand or by machine, like any other material used to produce shoes, bags, clothes or furniture coverings.

For example, documents n. WO2009/080489 and DE19506107 relate to fatliquors based on glycol polymer and maleic anhydride and reaction thereof; in both cases they require neutralizing agents during the reaction with sodium metabisulphite.

Another drawback is that such fatliquors are not suitable for providing the above mentioned particular physical characteristics to the leather.

It is therefore object of the present invention providing a new substance based on vegetable and / or synthetic raw materials from renewable resources that overcomes the drawbacks of the art.

Another object of the invention is to provide a substance suitable for use in fatliquoring products for the leather, which is the most efficient of the known substances, so that it reduces the required quantity of the same per kg of the leather.

Yet another object of the invention is to provide a substance which allows to reduce the pollutant load (COD) in the exhausted bath at the end of the retanning and consequently the emission of pollutants into the environment.

Another object of the invention is to provide a substance that allows obtaining an emulsion or a solution which remains stable during its transportation or its storage period.

Another object of the invention is to provide a substance that allows to obtain a fat liquoring emulsion or solution that is strongly fixed to the leather, which does not allow being extracted, so that it is possible to wash the treated leather even in the washing machine.

This aim, these objects and others, which will become apparent hereinafter, are achieved by a substance according to attached independent claim 1, to which reference is made in full.

Detail features of the substance according to the invention are shown in the dependent claims, which are referred to here in full.

Advantageously, the subject of the invention is a polymeric fat type B (named GRASSPOL B, which is a sulfited maleic diester) based on a combination of glycol polymer + maleic anhydride previously reacted with a natural or synthetic fatty alcohol and/or a fatty ethoxylated alcohol and/or a fatty ethoxylated acid and/or a fatty ethoxylated amine + sulfitation according to the invention.

In particular, according to the present invention, the glycol polymer is combined in a molar ratio 1:0.7 - 1.3, preferably 1:1, with a previously prepared combination of maleic anhydride, in a molar ratio 1:0.7 - 1.3, preferably 1:1, with fatty alcohols C6-C24 alkyl or C6-C24 alkenyl, preferably C10-C20,

> or a fatty ethoxylated alcohol having the general formula R(C2H4O)mH with R = C6-C24 alkyl or C6-C24 alkenyl, preferably C10-C20, and m varying from 2 to 300, preferably varying from 2 to 8,
>
> or a fatty ethoxylated carboxylic acid having the general formula RCO2(C2H4O)mH with R = C6-C24 alkyl or C6-C24 alkenyl, preferably C10-C20 and m varying from 2 to 300, preferably varying from 2 to 8
>
> or a fatty ethoxylated amine having the general formula RN(C2H4O)mH(C2H4O)nH with R = C6-C24 alkyl or C6-C24 alkenyl, preferably C10-C20, and m varying from 2 to 300 and n varying from 2 to 300, preferably m varying from 2 to 10 and n varying from 2 to 10,
>
> or a fatty ethoxylated amine having the general formula RR'N(C2H4O)mH with R and R' = C6-C24 alkyl or C6-C24 alkenyl, preferably C10-C20, and m varying from 2 to 300, preferably varying from 2 to 10.

According to the invention, the glycol polymer is a copolymer of PEG/PPG having the general formula HO(C2H4O)n(C3H6O)mH with m varying from 2 to 300 and n varying from 2 to 300, preferably m varying from 2 to 8 and n varying from 2 to 8.

Always thanks to the polymeric fatliquor of the invention, obtaining the increase of the duration of life of leather products and the increase of the comfort characteristics of the leather products is possible, in particular with regard to softness, smoothness and lightness of the same, their washability (think about the convenience of washing bags, shoes, etc. also directly in the washing machine), their resistance to wear and to time.

Further characteristics and advantages of the invention will become apparent from the description of a preferred

embodiment, but not exclusive of the substance according to the invention, illustrated below by way of illustration and not of limitation.

The results obtained by the substance of the invention are consistent with the proposed objects, in particular:

- the non renewable raw materials from animal and synthetic origin have been replaced with olein from plant origin, both arising from the trans-esterification of vegetable oils such as oils of various seeds as jatropha, castor, canola, soybean and rapeseed and, above all, with the recovery of waste oleic acids arising from other processes (for example for the production of biodiesel) or with synthetic oils recycled from other processes with an additional benefit for the community;
- the quantity of fatliquor used per Kg of leather has been reduced (on average 20% less of fatliquor on the weight of the leather), still obtaining leathers softer;
- the pollution load produced by the current phase of greasing, as measured by an average reduction of the COD of about 40-60%, resulting both from a lower use of fatliquor than a better fixation on the leather of the emulsions, was reduced;
- sulfates in the exhausted baths end retanning were reduced (approximately 20%);
- an increase of the comfort characteristics of the leather products took place, in particular with regard to softness, smoothness and lightness of the same and their washability.

Advantageously, the leather which was produced by this new system has a softness, a lightness, a lower specific weight, higher physical-chemical resistance and washability than today standard of the leather which was produced by the traditional fat liquoring systems.

The table below shows the average compositions of the fatty acids present in the oils and vegetal fats which fulfill the criteria mentioned and the method of search so exposed, in decreasing percentage of unsaturated fatty acids. Also indicative prices are reported, referring generally to a single order of at least 10 tons, and the production areas or major distribution. In the light of the research performed, the following renewable sources of oils, alternatives to the classic use of soybean oil, canola, corn and sunflower, which satisfy the criterion of composition (70% of fatty acids up) and cost (50 € cents / kg or less) and which are promising for use in the tanning industry have been identified:

| Nome | Pianta rappresentativa | % Mono | % Poli | % M+P | % Sat | Prezzi indicativi (€/kg) e zona di provenienza | |
|---|---|---|---|---|---|---|---|
| **Ricino** | *Ricinus communis* | 94 | 3 | **97** | **2** | **0.45 - 1.37** | Malesia |
| **Tung** | *Vernicia fordii* | 4 | 91 | **95** | **5** | **1.60 - 1.90** | Cina |
| **Perilla** | *Perilla frutescens* | 10 | 84 | **94** | **6** | **0.76 - 9.13** | Cina |
| **Canola** | *Brassicaceae* | 85 | 33 | **93** | **7** | **0.25 - 0.65** | Canada |
| **Semi di lino** | *Linum usitatissumum* | 19 | 73 | **92** | **8** | **0.76 - 1.52** | Cina |
| **Colza (grezzo)** | *Brassica napus* | 61 | 31 | **92** | **8** | **0.94** | (web)* |
| **Cartamo** | *Carthamus tinctorius* | 12 | 78 | **90** | **10** | **0.76 - 7.00** | India, Cina |
| **Semi di girasole** | *Helianthus annuus* | 55 | 34 | **89** | **8** | **0.60 - 1.38** | Cina** |
| **Vinaccioli** | *Vitis vinifera* | 20 | 67 | **87** | **13** | **0.76 - 6.99** | Cina |
| **Semi di canapa** | *Cannabis sativa* | 11 | 76 | **87** | **7** | **0.48 - 0.68** | Cina |
| **Mais** | *Zea mays* | 25 | 60 | **85** | **14** | **0.60 - 1.52** | Cina" |
| **Oliva** | *Olea europaea* | 73 | 11 | **84** | **14** | **2.25** | (web)* |
| **Sesamo** | *Sesamum indicum* | 53 | 30 | **83** | **17** | **1.75 - 1.90** | India |
| **Soia** | *Glycine max* | 23 | 58 | **81** | **15** | **0.84** | (web)* |
| **Jatropha** | *Jatropha curcas* | 42 | 35 | **77** | **22** | **0.19 - 0.53** | India |
| **Arachidi** | *Arachis hypogaea* | 44 | 31 | **75** | **20** | **1.72** | (web)* |
| **Semi di cotone** | *Gossypium hirsutum* | 13 | 58 | **71** | **29** | **0.34 - 0.42** | Cina |

(continued)

| Nome | Pianta rappresentativa | % Mono | % Poli | % M+P | % Sat | Prezzi indicativi (€/kg) e zona di provenienza | |
|---|---|---|---|---|---|---|---|
| **Cocco** | *Cocus nucifera* | 4 | 66 | **70** | **30** | **1.09** | (web)* |
| **Neem** | *Azadirachta indica* | 62 | 8 | **70** | **30** | **3.80 - 4.56** | India |

- Canola oil (> 90% of unsaturated fatty acids, minimum price 0.25 €/kg);
- Jatropha oil (>75% of unsaturated fatty acids, minimum price 0.19 €/kg);
- Castor oil (> 95% of unsaturated fatty acids, minimum price 0.48 €/kg);
- Hemp Seed Oil (>85% of unsaturated fatty acids, minimum price 0.48 €/kg);
- Cotton Seed Oil (>70% of unsaturated fatty acids, minimum price 0.34 €/kg).

Among these, castor oil and hemp seed are worth mentioning since rich in unsaturated acids and of little use in the food industry and for the production of biodiesel and the jatropha oil, both for its affordability and because it comes from uncompetitive crops and provides a large amount of product per hectare needing few water resources.

On these oils, as a result of transesterification with suitable alcohols such as methanol or long chain complex alcohols such as polyethylene glycols, perform modifications of classical type on the double bonds has been possible by the action of bisodium sulfite or sulfuric acid.

Another very important source that we have identified is the one resulting from residue oils from other processes, such as exhausted frying oils and residues from industrial processes (eg. Production of biodiesel).

Analyzing the processing of biodiesel, using soybean oils, canola oils, seed oils and various also exhausted frying oils, we were able to identify another waste product of this process which is the raw olein, also available in this abundance and with lower prices per euro, with a number of double bonds in the fatty chain and with a constant quality suitable for use in the tanning industry.

This product was found to be an ideal raw material for us, with the right responsiveness for the leather industry, resulting from the recycling and renewable sources, with a lower cost per euro and available nationwide in great quantities (about a few thousand tons / year).

On these selected oils we performed a series of chemical reactions to make emulsifiable in water and applied as lubricants on leather.

Among the reactions that we have studied and experimented there are the sulfonation and sulfitation of vegetable oils, or the addition of sulfuric acid or bisulfite to the double bonds present in the triglycerides (as a model to refine these reactions we also used the seed oil sunflower, as a not very reactive oil on average), the changes in triglycerides through reactions such as Diels - Alder so we can insert new reactive groups able to make self-emulsifying the oil itself, the changes of the oils through the trans-esterification replacing part of glycerol with modified polymers or surfactants.

Briefly describe the techniques developed and used for our experiments:

Sulfonation

The oil is placed in a beaker equipped with thermometer, mechanical stirring and water bath, while with the aid of a dropping funnel concentrated sulfuric acid (96% w / w) is added slowly, under vigorous stirring, paying attention that the temperature does not exceed 40° C. The ratio of oil and acid is generally 9: 1 by weight. At the end of the addition, approximately 2 hours, the reaction mixture became brown / black, is stirred for another 30 minutes, and then a water solution of NaCl 15% w / v (100 mL of solution per 100 grams of mixture) is added: the reaction turns slightly beige and becomes milky.

The whole thing is poured into a separating funnel and left to stand overnight (18 hours). After separating the aqueous phase, the remaining organic phase is neutralized with aqueous NaOH 0.1 M.

Following this operation, a small amount of a further phase, the upper, less dense, but more viscous phase than the underlying one, almost certainly constituted largely by unsulfonated oil mixed with small fractions of oil partially sulfonate, may be separated.

Sulfitation

A serpentine of steel having 3 spirals, immersed in quartz sand, is placed in a beaker, and then the heater is placed on a plate at 250° C in order to heat the air which is passed through the serpentine. This is bubbled into a reactor equipped with mechanical stirring and heated continuously at 80° C. 250 g of oil, 15 grams of sodium metabisulfite and

25 mL of water to favor the dissolution of the salt are placed in the beaker reaction. The reaction is then kept under stirring in continuous flow of hot air for 48 hours. Finally, the product is allowed to stand, to decant the residual salt, from which the sulphited oil is siphoned or filtrate.

Diels-Alder

The maleic anhydride is one of the most common used dienophiles in the Diels-Alder reactions, therefore we tried to add it to a diene represented by a mixture of polyunsaturated fatty acids derived from soya.

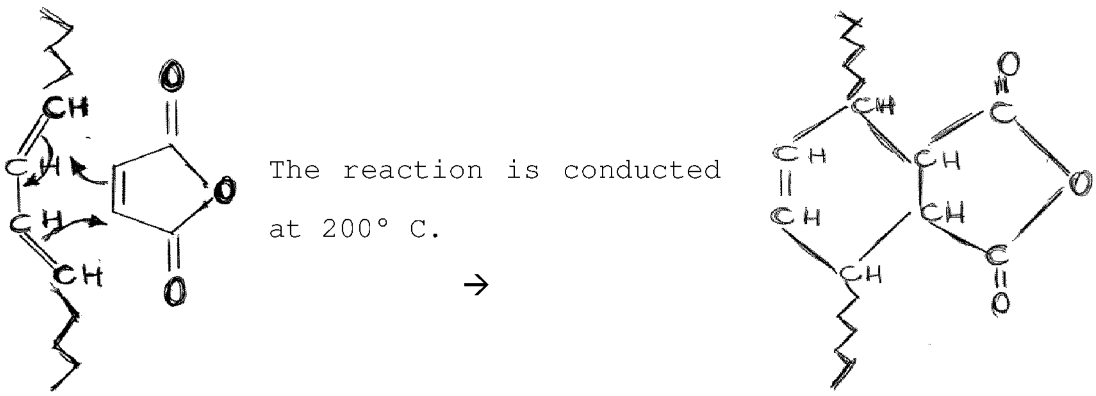


Trans-esterification

The esterification is the reaction between an acid (in our case the carboxylic acid) and an alcohol (in our case Polyethyleneglycol PEG) as illustrated below:

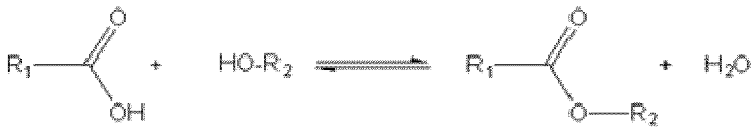

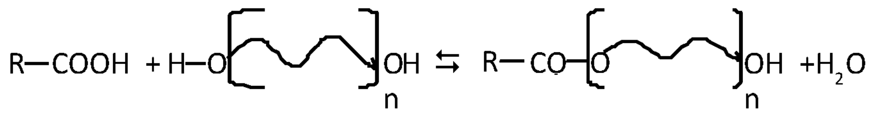

We considered to be able to create esters in the laboratory, starting from fatty acids of vegetable origin and PEG with molecular weight between 300 and 400 g / mol able to have, after the esterification, a hydroxyl group available to react with maleic anhydride, that in a second time will allow sulfitation of the same ester.

After loading the mixture of fatty acids and PEG in the reactor in the presence of an acid catalyst (paratoluenesulfonic acid) the temperature is brought between 180/200° C for at least 6h, during this phase the water is distilled leading to -0.5 bar the pressure inside the reactor; after 6h spent the acidity of the ester obtained is controlled to be less than 5 mg KOH / g. We must therefore cool down to 60°C and introduce the maleic anhydride, then return the temperature to 90° C allowing to react for 2-3h; prepare a mixture of diethanolamine, N2S2O5 and water that will be added to slowly after the reaction with maleic anhydride, this with regard to a mono-ester maleic acid (GRASSPOL A), in the case of the maleic di-ester using a solution of only water and N2S2O5.

The reaction of sulfitation will last for a variable time of 3-4 h.

A variant of esterification is the trans-esterification, wherein an alcohol is reacted not with an acid, but with another ester; the result is the replacement of the alcoholic part of the ester:

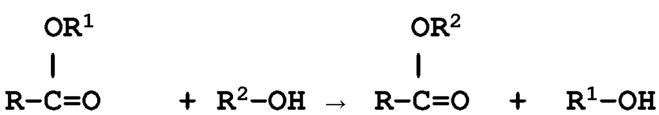

In our case, we start from a triglyceride vegetable or from a mixture of methyl esters resulting from the synthesis of biodiesel, which are reacted with PEG having a molecular weight between 300 and 400.

In the first case a mixture of mono-glycerides, diglycerides and acid / PEG esters is formed, in the second case the methyl alcohol is replaced with the PEG.

All these chemical modifications of the oils were made with the aim both of making it more similar to leather and to avoid successive additions of surfactants. Although a greater amount of sulfonic groups may be useful to increase the impregnation of fatliquoring in the leather, we needed to experimentally verify this assumption, since we may need to dilute the product with non-derivatized oil for the purpose of application: in this case the sulfited product could act as emulsifier without the addition of further surfactants.

Among the benefits that immediately emerged using the new biopolymers, in addition to the reduction of COD, there is the possibility of also using a 20% less fatliquor compared to standard procedures while maintaining the desired softness and increasing the lightness of the leather (lower specific weight), a better uniformity of the dyes and higher dyeing yields in some cases even 250 (on average 10-15%) with the possibility to reduce the percentage of use of expensive dyes.

From the first chemical and physical analysis performed on these first samples, soon another major benefit has emerged, namely the finding that the fatliquor based on biopolymers attaches more strongly to leather. Indeed, we have obtained data of fat extractability with solvent from the skin over the 3-4% compared to the usual 7-8% or even more (for comparison a test of extractability was made on a standard skin softness similar to a known tannery, finding values of extractability around 120).

The polymeric fatliquors subject of the invention may be obtained by the following procedure:

Polymers based on PEG and / or PPG + [natural and / or synthetic fatty alcohols and/or a fatty ethoxylated alcohol and/or a fatty ethoxylated acid and/or a fatty ethoxylated amine + maleic anhydride] + sulfitation (GRASSPOL B = sulfited maleic diester).

In the event we adopt said procedure, we obtain a polymeric fatliquor type B (GRASSPOL B, sulfited maleic diester).

These new substances can be used as fatliquoring agents alone or as raw materials for formulating fatliquoring agents for leather, skins, furs, fabrics or other fibrous materials.

The leathers treated with these polymeric fatty are soft, smooth, with a fine grain and compact. Advantageously, the fatliquoring treatments based on these polymeric fatliquors have a high factor of exhaustion and a high fattening power and this leads to allow us using a smaller quantity compared to existing agents fatliquoring with equal quality result on the leather, thus obtaining a lower COD of exhaust -20/30% in the exhausted baths.

The procedures for the production of polymeric fatliquors can be described as follows:

A) a PEG polymer having the general formula HO(CH2CH2O)nH with n varying from 3 to 300, preferably from 4 to 10, or a PPG polymer having the general formula HO(C3H6O)mH with m varying from 3 to 300, preferably varying from 4 to 10, or a copolymer of PEG/PPG having the general formula HO(C3H6O)m(CH2CH2O)nH with m varying from 2 to 300 and n varying from 2 to 300, preferably m varying from 2 to 8 and n varying from 2 to 8,
is combined in a molar ratio 1:0.7 - 1.3, preferably 1:1, with a fatty carboxylic acid C8-C24 alkyl or C8-C24 alkenyl, preferably C10-C18, at the temperature of 160°C - 350°C, preferably from 180 to 230°C, for from 2 to 10 hours, preferably 4 - 6 hours, it is then subjected to - 0.1 to -0.9 Bar, preferably -0.3 to -0.6 Bar, for from 20 minutes to 4 hours, preferably from 1 to 2 hours, then it is combined with maleic anhydride in a molar ratio 1:0.7 - 1.3, preferably 1:1, at the temperature of 50 - 150°C, preferably from 70 to 90°C, for from 1 to 5 hours, preferably from 1 to 3 hours, then it is treated with a water solution containing 20 - 80% sodium metabisulfite or sodium sulfite or sodium bisulfite or ammonium bisulfite or gas sulfite anhydride in a molar ratio 1:0.7 - 1.3 preferably 1:1, at a temperature from 50 to 100°C, preferably from 80 to 95°C, for from 1 to 4 hours, preferably from 1 to 2 hours, and finally it is neutralized with alkalis as ammonia, sodium hydroxide, potassium hydroxide, Diethanolamine, Triethanolamine, Monoethanolamine in a ratio 1:0.7 - 1.3, preferably 1:1, so as to obtain a water solution or dispersion or emulsion of polymeric fatliquor type A, having from 20% to 90% of active substance, preferably from 30 to 70%; (polymeric fatliquors type A, GRASSPOL A)

B) a PEG polymer having the general formula HO(CH2CH2O)nH with n varying from 3 to 300, preferably varying

from 4 to 10, or of PPG having the general formula HO(C3H6O)mH with m varying from 3 to 300, preferably varying from 4 to 10, or a copolymer of PEG/PPG having the general formula HO(C3H6O)m(CH2CH2O)nH with m varying from 2 to 300 and n varying from 2 to 300, preferably m varying from 2 to 8 and n varying from 2 to 8,

is combined in a molar ratio 1:0.3 - 1.3, preferably 1:0.3 - 0.7, with natural based (fish, animals, vegetal) and / or synthetic glycerides and / or natural and/or synthetic fatty esters at a temperature of 160°C - 350°C, preferably from 180 to 230°C, for from 2 to 10 hours, preferably 4 - 6 hours, it is then subjected to - 0.1 to - 0.9 Bar, preferably from - 0.3 to - 0.6 Bar, for from 20 minutes to 6 hours, preferably from 2 to 4 hours,
then it is combined with maleic anhydride in a molar ratio 1:0.7 - 1.3, preferably 1:1, at a temperature of 50 - 150°C, preferably from 70 to 90°C, for from 1 to 5 hours, preferably from 1 to 3 hours, then it is treated with a water solution containing from 20 to 80% sodium metabisulfite or sodium sulfite or sodium bisulfite or ammonium bisulfite or gas sulfite anhydride in a molar ratio 1:0.7 - 1.3, preferably 1:1, at a temperature of 50-100°C, preferably from 80 to 95°C, for from 1 to 4 hours, preferably from 1 to 2 hours, and finally it is neutralized with alkalis as ammonia, sodium hydroxide, potassium hydroxide, Diethanolamine, Triethanolamine, Monoethanolamine in a ratio 1:0.7 - 1.3, preferably 1:1, so as to obtain a water solution or dispersion or emulsion of polymeric fatliquor type A, having from 20% to 90% of active substance, preferably from 30 to 70%; (polymeric fatliquors type A, GRASSPOL A)

C) a PEG polymer having the general formula HO(CH2CH2O)nH with n varying from 3 to 300, preferably varying from 4 to 10, or of PPG having the general formula HO(C3H6O)mH with m varying from 3 to 300, preferably varying from 4 to 10, or a copolymer of PEG/PPG having the general formula HO(CH36O)m(CH2CH2O)nH with m varying from 2 to 300 and n varying from 2 to 300, preferably m varying from 2 to 8 and n varying from 2 to 8, or a fatty ethoxylated alcohol having the general formula R(CH2CH2O)mH with R = C6-C24 alkyl or C6-C24 alkenyl, preferably C10-C20, and m varying from 2 to 300, preferably varying from 2 to 8, or a fatty ethoxylated carboxylic acid having the general formula RCO2(CH2CH2O)mH with R = C6-C24 alkyl or C6-C24 alkenyl, preferably C10-C20, and m varying from 2 to 300, preferably varying from 2 to 8, or a fatty ethoxylated amine having the general formula RN(CH2CH2O)mH(CH2CH2O)nH with R = C6-C24 alkyl or C6-C24 alkenyl, preferably C10-C20, and m varying from 2 to 300 and n varying from 2 to 300, preferably m varying from 2 to 10 and n varying from 2 to 10, or a fatty ethoxylated amine having the general formula RR'N(CH2CH2O)mH with R and R' = C6-C24 alkyl or C6-C24 alkenyl, preferably C10-C20, and m varying from 2 to 300, preferably varying from 2 to 10,

is combined in a molar ratio 1:0.7 - 1.3, preferably 1:1, with
a previously prepared combination of fatty alcohols C6-C24 alkyl or C6-C24 alkenyl, preferably C10-C20,
or a fatty ethoxylated alcohol having the general formula R(C2H4O)mH with R = C6-C24 alkyl or C6-C24 alkenyl, preferably C10-C20, and m varying from 2 to 300, preferably varying from 2 to 8,
or a fatty ethoxylated carboxylic acid having the general formula RCO2(C2H4O)mH with R = C6-C24 alkyl or C6-C24 alkenyl, preferably C10-C20 and m varying from 2 to 300, preferably varying from 2 to 8
or a fatty ethoxylated amine having the general formula RN(C2H4O)mH(C2H4O)nH with R = C6-C24 alkyl or C6-C24 alkenyl, preferably C10-C20, and m varying from 2 to 300 and n varying from 2 to 300, preferably m varying from 2 to 10 and n varying from 2 to 10,
or a fatty ethoxylated amine having the general formula RR'N(C2H4O)mH with R and R' = C6-C24 alkyl or C6-C24 alkenyl, preferably C10-C20, and m varying from 2 to 300, preferably varying from 2 to 10,
with maleic anhydride in a molar ratio 1:0.7 - 1.3, preferably 1:1, at a temperature of 50 - 150°C, preferably from 70 to 90°C, for from 1 to 5 hours, preferably from 1 to 3 hours;
at a temperature of 160°C - 350°C, preferably from 180 to 230°C, for from 2 to 10 hours, preferably 4 - 6 hours. It is then subjected to -0.1 to -0.9 Bar, preferably from -0.3 to -0.6 Bar with respect to the unitary atmospheric pressure (vacuum conditions to facilitate the making of the maleic diesters), for from 20 minutes to 4 hours, preferably from 1 to 2 hours, till obtaining an acidity of the forming maleic diester to be less than 5 mg KOH;
then it is sulfited with a water solution containing from 20 to 80% sodium metabisulfite or sodium sulfite or sodium bisulfite or ammonium bisulfite or gas sulfite anhydride in a molar ratio 1:0.7 - 1.3 preferably 1:1, at a temperature of 50 to 100°C, preferably from 80 to 95°C, for from 1 to 4 hours, preferably from 1 to 2 hours, so as to obtain a water solution or dispersion or emulsion of polymeric fatliquor type B (sulfited maleic diester, GRASSPOL B), having from 20 % to 90% of active substance, preferably from 30 to 70%.

Advantageously, as it can be seen from above, the last procedure C), and in particular the use of a diester of maleic anhydride, has the advantage of allowing to react successively with sodium metabisulfite without the use of neutralizing agents in the reaction.
In case of sulfitation with gas sulfite anhydride the process is followed by a neutralization with alkalis as ammonia,

sodium hydroxide, potassium hydroxide, Diethanolamine, Triethanolamine, Monoethanolamine in a ratio 1:0.7 - 1.3, preferably 1:1

Resuming, the reaction is a combination of:

(PEG or PPG or Fatty ethoxilated acid or…) + (Fatty alcohols or fatty acid ethoxilated or… + maleic anhydride) + sulfitation = GRASSPOL B.

The invention as conceived is susceptible to numerous modifications and variations, all falling within the protective scope of the appended claims.

Moreover, all the details may be replaced with other technically equivalent elements.

In practice, the materials employed, as well as the doses and the values, may be varied depending on the contingent requirements and the state of the art.

## Claims

**1.** Polymeric fatliquor comprising a sulfited maleic diester, obtained by a method comprising the following steps:

- reaction of

  fatty alcohols C6-C24 alkyl or C6-C24 alkenyl, or
  a fatty ethoxylated alcohol having the general formula R(C2H4O)mH with R = C6-C24 alkyl or C6-C24 alkenyl, and m varying from 2 to 300, or
  a fatty ethoxylated carboxylic acid having the general formula RCO2(C2H4O)mH with R = C6-C24 alkyl or C6-C24 alkenyl and m varying from 2 to 300,
  or a fatty ethoxylated amine having the general formula RN(C2H4O)mH(C2H4O)nH with R = C6-C24 alkyl or C6-C24 alkenyl and m varying from 2 to 300 and n varying from 2 to 300,
  or a fatty ethoxylated amine having the general formula RR'N(C2H4O)mH with R and R' = C6-C24 alkyl or C6-C24 alkenyl, and m varying from 2 to 300, with
  maleic anhydride, in a molar ratio 1:0.7 - 1.3, at a temperature of 50 - 150°C, for from 1 to 5 hours, to obtain a first reaction product,

- reaction of said first reaction product with a copolymer of PEG/PPG having the general formula HO(CH36O)m(CH2CH2O)nH with m varying from 2 to 300 and n varying from 2 to 300, in a molar ratio 1:0.7 - 1.3, at a temperature of 160°C - 350°C, for from 2 to 10 hours to obtain a second reaction product;
- vacuuming said second reaction product at -0.1 to - 0.9 bar with respect to atmospheric pressure, for from 20 minutes to 4 hours, till obtaining an acidity of the forming maleic diester to be less than 5 mg KOH;
- sulfitation of said second reaction product with a water solution containing from 20 to 80% sodium metabisulfite or sodium sulfite or sodium bisulfite or ammonium bisulfite or gas sulfite anhydride in a molar ratio 1:0.7 - 1.3 preferably 1:1, at a temperature of 50 to 100°C, for from 1 to 4 hours, so as to obtain a water solution or dispersion or emulsion of polymeric fatliquor type B (sulfited maleic diester, GRASSPOL B), having from 20 % to 90% of active substance.

**2.** Polymeric fatliquor according to claim 1, **characterized in that** said fatty alcohols or fatty ethoxylated alcohol or fatty ethoxylated carboxylic acid or fatty ethoxylated amine or fatty ethoxylated amine
and

  said maleic anhydride
  are reacted in a molar ratio 1:1, at a temperature of 70 to 90°C, for from 1 to 3 hours.

**3.** Polymeric fatliquor according to claim 1 or 2, **characterized in that** said first reaction product is obtained by the reaction of

  fatty alcohols C10-C20 alkyl or C10-C20 alkenyl, or fatty ethoxylated alcohol having the general formula R(C2H4O)mH with R = C10-C20 alkyl or C10-C20 alkenyl and m varying from 2 to 8, or

fatty ethoxylated carboxylic acid having the general formula RCO2(C2H4O)mH with R = C10-C20 alkyl or C10-C20 alkenyl, m varying from 2 to 8, or
fatty ethoxylated amine having the general formula RN(C2H4O)mH(C2H4O)nH with R = C10-C20 alkyl or C10-C20 alkenyl, and m varying from 2 to 10 and n varying from 2 to 10, or
fatty ethoxylated amine having the general formula RR'N(C2H4O)mH with R and R' = C10-C20 alkyl or C10-C20 alkenyl, and m varying from 2 to 10.

**4.** Polymeric fatliquor according to any one of the previous claims, **characterized in that** said first reaction product and said copolymer of PEG/PPG are reacted in a molar ratio 1:1 at a temperature of 180 - 230°C, for 4 - 6 hours.

**5.** Polymeric fatliquor according to any one of the previous claims, **characterized in that** for the copolymer of PEG/PPG having the general formula HO(CH36O)m(CH2CH2O)nH m varies from 2 to 8 and n varies from 2 to 8.

**6.** Polymeric fatliquor according to any one of the previous claims, **characterized in** vacuuming said second reaction product at -0.3 to -0.6 bar with respect to atmospheric pressure, for from 1 to 2 hours.

**7.** Polymeric fatliquor according to any one of the previous claims, **characterized in that** said sulfitation occurs at a temperature from 80 to 95°C, for from 1 to 2 hours, so as to obtain a water solution or dispersion or emulsion of polymeric fatliquor type B (sulfited maleic diester, GRASSPOL B), having from 30 % to 70% of active substance.

**8.** Polymeric fatliquor according to any one of the previous claims, **characterized in that**, after the step of vacuuming, the following step is provided:

- treating the compound with gas sulfite anhydride in a molar ratio 1: 0.7-1.3 at a temperature of 50 to 100°C, for from 1 to 4 hours, followed by a neutralization with alkalis such as ammonia, sodium hydroxide, potassium hydroxide, Diethanolamine, Triethanolamine, Monoethanolamine in a ratio 1:0.7 - 1.3, so as to obtain a water solution or dispersion or emulsion of polymeric fatliquor, having from 20 % to 90% of active substance.

## Patentansprüche

**1.** Polymeres Fettungsmittel, umfassend einen sulfatierten Maleinsäurediester, erlangt durch ein Verfahren, das die folgenden Schritte umfasst:

- Reagieren von

Fettalkoholen C6-C24-Alkyl oder C6-C24-Alkenyl oder eines ethoxylierten Fettalkohols, der die allgemeine Formel R(C2H4O)mH aufweist, wobei R = C6-C24- Alkyl oder C6-C24- Alkenyl ist und m von 2 bis 300 variiert,
oder einer ethoxylierten Fettcarbonsäure, die die allgemeine Formel RCO2(C2H4O)mH aufweist, wobei R = C6-C24-Alkyl oder C6-C24-Alkenyl ist und m von 2 bis 300 variiert, oder einem ethoxylierten Fettamin, das die allgemeine Formel RN(C2H4O)mH(C2H4O)nH aufweist, wobei R = C6-C24-Alkyl oder C6-C24-Alkenyl ist und m von 2 bis 300 variiert und n von 2 bis 300 variiert,
oder einem ethoxylierten Fettamin, das die allgemeine Formel RR'N (C2H4O)mH aufweist, wobei R und R' = C6-C24-Alkyl oder C6-C24-Alkenyl sind und m von 2 bis 300 variiert, mit Maleinsäureanhydrid in einem Molverhältnis von 1:0,7 - 1,3 bei
einer Temperatur von 50 - 150 °C über 1 bis 5 Stunden, um ein erstes Reaktionsprodukt zu erlangen,

- Reagieren des ersten Reaktionsprodukts mit einem PEG/PPG-Copolymer, das die allgemeine Formel HO (CH36O)m (CH2CH2O)nH aufweist,
wobei n von 2 bis 300 variiert und n von 2 bis 300 variiert, in einem Molverhältnis von 1:0,7 - 1,3, bei einer Temperatur von 160 °C - 350 °C über 2 bis 10 Stunden, um ein zweites Reaktionsprodukt zu erlangen;
- Vakuumieren des zweiten Reaktionsprodukts bei -0,1 bis - 0,9 bar in Bezug auf Atmosphärendruck über 20 Minuten bis 4 Stunden, bis eine Acidität des sich bildenden Maleinsäurediesters von weniger als 5 mg KOH erlangt ist;
- Sulfatieren des zweiten Reaktionsprodukts mit einer wässrigen Lösung, die 20 bis 80% Natriummetabisulfit oder Natriumsulfit oder Natriumbisulfit oder Ammoniumbisulfit oder Gassulfitanhydrid in einem Molverhältnis von 1:0,7-1,3, vorzugsweise 1:1, bei einer Temperatur von 50 bis 100 °C über 1 bis 4 Stunden, um eine wässrige

Lösung oder Dispersion oder Emulsion eines polymeren Fettungsmittels Typ B (sulfatierter Maleinsäurediester, GRASSPOL B) mit 20 bis 90 % Wirksubstanz zu erlangen.

**2.** Polymeres Fettungsmittel nach Anspruch 1, **dadurch gekennzeichnet, dass** die Fettalkohole oder ethoxylierten Fettalkohole oder ethoxylierten Fettcarbonsäuren oder ethoxylierten Fettamine oder ethoxylierten Fettamine und das Maleinsäureanhydrid in einem Molverhältnis von 1:1 bei einer Temperatur von 70 bis 90 °C über 1 bis 3 Stunden reagiert werden.

**3.** Polymeres Fettungsmittel nach Anspruch 1 oder 2, **dadurch gekennzeichnet, dass** das erste Reaktionsprodukt erlangt wird durch die Reaktion von Fettalkoholen C10-C20-Alkyl oder C10-C20-Alkenyl oder ethoxylierten Fettalkoholen, die die allgemeine Formel R(C2H4O)mH aufweisen, wobei R = C10-C20-Alkyl oder C10-C20-Alkenyl ist und m von 2 bis 8 variiert, oder ethoxylierten Fettcarbonsäuren, die die allgemeine Formel RCO2(C2H4O)mH aufweisen, wobei R = C10-C20-Alkyl oder C10-C20- Alkenyl ist, wobei m von 2 bis 8 variiert, oder ethoxyliertem Fettamin, das die allgemeine Formel RN(C2H4O)mH(C2H4O)nH aufweist, wobei R = C10-C20-Alkyl oder C10-C20- Alkenyl ist und m von 2 bis 10 variiert und n von 2 bis 10 variiert, oder ethoxyliertem Fettamin, das die allgemeine Formel RR'N(C2H4O)mH aufweist, wobei R und R' = C10-C20-Alkyl oder C10-C20- Alkenyl ist, und m von 2 bis 10 variiert.

**4.** Polymeres Fettungsmittel nach einem der vorherigen Ansprüche, **dadurch gekennzeichnet, dass** das erste Reaktionsprodukt und das PEG/PPG-Copolymer in einem Molverhältnis von 1:1 bei einer Temperatur von 180 - 230 °C über 4-6 Stunden reagiert werden.

**5.** Polymeres Fettungsmittel nach einem der vorherigen Ansprüche, **dadurch gekennzeichnet, dass** für das Copolymer von PEG/PPG, das die allgemeine Formel HO(CH36O)m (CH2CH2O)nH aufweist, m von 2 bis 8 variiert und n von 2 bis 8 variiert.

**6.** Polymeres Fettungsmittel nach einem der vorherigen Ansprüche, **dadurch gekennzeichnet, dass** das zweite Reaktionsprodukt bei -0,3 bis -0,6 bar in Bezug auf Atmosphärendruck über 1 bis 2 Stunden vakuumiert wird.

**7.** Polymeres Fettungsmittel nach einem der vorherigen Ansprüche, **dadurch gekennzeichnet, dass** die Sulfatierung bei einer Temperatur von 80 bis 95 °C über 1 bis 2 Stunden erfolgt, um eine wässrige Lösung oder Dispersion oder Emulsion eines polymeren Fettungsmittels Typ B (sulfatierter Maleinsäurediester, GRASSPOL B) zu erlangen, die 30 % bis 70% Wirksubstanz aufweist.

**8.** Polymeres Fettungsmittel nach einem der vorherigen Ansprüche, **dadurch gekennzeichnet, dass** nach dem Schritt eines Vakuumierens der folgende Schritt bereitgestellt ist:

- Behandeln der Verbindung mit Gassulfitanhydrid in einem Molverhältnis von 1:0,7-1,3 bei einer Temperatur von 50 bis 100 °C über 1 bis 4 Stunden, gefolgt von einer Neutralisierung mit Alkalien, wie z. B. Ammoniak, Natriumhydroxid, Kaliumhydroxid, Diethanolamin, Triethanolamin, Monoethanolamin in einem Verhältnis von 1:0,7- 1,3, um eine wässrige Lösung oder Dispersion oder Emulsion eines polymeren Fettungsmittels zu erlangen, die 20% bis 90% der Wirksubstanz aufweist.

## Revendications

**1.** Des liqueurs grasses polymères comprenant un diester maléique sulfité, obtenu par une méthode comprenant les étapes suivantes:

- une réaction d'

alcool gras C6-C24 alkyle ou C6-C24 alcényle, ou un alcool gras éthoxylé ayant une formule générale R (C2H4O) mH avec R= C6-C24 alkyle ou C6-C24 alcényle, et m allant de 2 à 300, ou un acide carboxylique gras éthoxylé ayant une formule générale RCO2 (C2H4O) mH avec R = C6-C24 alkyle ou C6-C24 alcényle et m allant de 2 à 300, ou une amine grasse éthoxylée ayant une formule générale RN (C2H4O) mH (C2H4O) nH avec R = C6-C24 alkyle ou C6-C24 alcényle et m allant de 2 à 300 et n allant de 2 à 300,
ou une amine grasse éthoxylée ayant une formule générale RR'N (C2H4O) mH avec R et R' = C6-C24 alkyle ou C6-C24 alcényle, et m allant de 2 à 300, avec anhydride maléique, dans un rapport molaire 1:0,7

- 1,3, à une température de 50 - 150 °C, pour 1 à 5 heures, pour obtenir un produit de première réaction,

- une réaction dudit premier produit de réaction avec un copolymère de PEG/PPG ayant une formule générale HO (CH36O) m (CH2CH2O) nH avec m allant de 2 à 300 et n allant de 2 à 300, dans un rapport molaire 1:0,7 - 1,3, à une température de 160 °C - 350 °C, pour 2 à 10 heures pour obtenir un produit de seconde réaction;
- aspirer ledit produit de seconde réaction à -0,1 à 0,9 bar par rapport à la pression atmosphérique,

pour 20 minutes à 4 heures, jusqu'à obtenir une acidité
de la formation de diester maléique pour être inférieur à 5 mg KOH;

- la sulfitation dudit produit de seconde réaction avec une solution d'eau contenant entre 20 à 80 % de métabisulfite de sodium ou de sulfite de sodium ou de bisulfite de sodium ou de bisulfite d'ammonium ou de gaz sulfite anhydride dans un rapport molaire 1:0,7 - 1,3 de préférence 1:1, à une température allant de 50 à 100 °C, pour 1 à 4 heures, de manière à obtenir une solution d'eau ou une dispersion, une émulsion ou une liqueur grasse polymérique de type B (diester maléique sulfité, GRASSPOL B), qui possède 20 à 90 % de substance active.

**2.** Une liqueur grasse polymère selon la revendication 1, **caractérisée par le fait que** lesdits alcools gras ou les alcools gras éthoxylé ou l'acide carboxylique gras éthoxylé ou l'amine éthoxylée grasse ou l'amine éthoxylée grasse et ledit anhydride maléique réagissent dans un rapport molaire 1:1, à une température de 70 à 90 °C, pour 1 à 3 heures.

**3.** Une liqueur grasse polymère selon la revendication 1 ou 2, **caractérisé par le fait que** dans ledit produit de première réaction est obtenu par la réaction d'alcool gras C10-C20 alkyle ou C10-C20 alcényle, ou l'alcool gras éthoxylé ayant une formule générale R (C2H4O) mH avec R = C10-C20 alkyle ou C10-C20 alcényle et m allant de 2 à 8, ou l'acide carboxylique gras éthoxylé ayant une formule générale RCO2 (C2H4O) mH avec R = C10-C20 alkyle ou C10-C20 alcényle, m allant de 2 à 8, ou une amine éthoxylée grasse ayant une formule générale RN (C2H4O) mH (C2H4O) nH avec R = C10-C20 alkyle ou C10-C20 alcényle, et m allant de 2 à 10 et n allant de 2 à 10, ou une amine éthoxylée grasse ayant une formule générale RR'N (C2H4O) mH avec R et R' = C10-C20 alkyle ou C10-C20 alcényle, et m allant de 2 à 10.

**4.** Une liqueur grasse polymère selon l'une quelconque des revendications précédentes, **caractérisée par le fait que** ledit premier produit de
réaction et ledit copolymère de PEG/PPG réagissent dans un rapport de molaire 1:1 à une température de 180 - 230 °C, pour 4-6 heures.

**5.** Une liqueur grasse polymère selon l'une quelconque des revendications précédentes, **caractérisée par le fait qu'**un copolymère de PEG/PPG ayant une formule générale HO (CH36O) m (CH2CH2O) nH m variant de 2 à 8 et n varie de 2 à 8.

**6.** Une liqueur grasse polymère selon l'une quelconque des revendications précédentes, **caractérisée par** l'aspiration dudit second produit de réaction allant de -0,3 à -0,6 bar par rapport à la pression atmosphérique, pour 1 à 2 heures.

**7.** Une liqueur grasse polymère selon l'une quelconque des revendications précédentes, **caractérisée par le fait que** la sulfitation se produit à une température allant de 80 à 95 °C, pendant 1 à 2 heures, de manière à obtenir une solution d'eau ou une dispersion, ou une émulsion de liqueur grasse polymérique de type B (diester maléique sulfité, GRASSPOL B), ayant de 30 % à 70 % de substance active.

**8.** Une liqueur grasse polymère selon l'une quelconque des revendications précédentes, **caractérisé par le fait, qu'**après l'étape d'aspiration, l'étape suivante est fournie:

- le traitement du composé avec l'anhydride de sulfite de gaz dans un rapport molaire 1: 0,7-1,3 à une température allant de 50 à 100 °C, pendant 1 à 4 heures, suivi par une neutralisation avec des alcalis comme l'ammoniac, hydroxyde de sodium hydroxide de potassium, diéthanolamine, triéthanolamine, monoéthanolamine dans un rapport molaire 1:0,7 - 1,3, de manière à obtenir une solution d'eau ou une dispersion ou un émulsion de liqueur grasse polymèrique, ayant 20 % à 90 % de substance active.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009080489 A
- DE 19506107